# EUROPEAN PATENT APPLICATION

(11) **EP 2 653 456 A1**
(43) Date of publication of application: **23.10.2013**
(21) Application number: 12460038.8
(22) Date of filing: 29.06.2012
(51) Int. Cl.: C05F 17/00, C05F 17/02, C05D 5/00, C05D 9/00

(54) **The method of obtaining the mineral-organic fertilizer from waste agricultural biogas digestate**

(30) Priority: 18.04.2012 PL 39887112
(71) Applicant: Bio Technology Sp. z o.o., 04-041 Warszawa (PL)
(72) Inventor: Kedzia, Wojciech Józef, 85-046 Bydgoszcz (PL); Merta, Robert, 41-710 Ruda Slaska (PL)
(74) Representative: Kaminski, Zbigniew

(57) **Abstract**

The method of obtaining the mineral-organic fertilizer from waste digestate characterized in that the post-fermentation waste constitutes 20-70% of the charge content of 42-50% s.m. in which 35-60% is the organic carbon is treated with concentrated sulfuric acid in an amount of 10-30% by weight of the charge, and then neutralized with magnesium oxide in an amount of 10-35% by weight of the charge in terms of pure magnesium carbonate at the rate of sterilization of microbiological reference conditioning of waste post-fermentation in the temperature range 108-150°C for 30 minutes while maintaining the temperature of the mixture in the rate of ≤ 2°C / 1 min.

## Description

This invention relates to a method for preparing permanent simultaneous mineral and organic fertilizer and heat in biogas plants.

There are two alternative ways of using waste for fertilizer or as fuel in combustion processes. Waste biogas digestate is a big problem, and economic organization. Used for the fermentation of the substrate determines the type of agricultural use of the emerging possibilities of digested matter, and in several cases these options are very limited. Apart from these difficulties, it is assumed that the use of wastes for traditional post-fermentation biogas plant with a capacity of 1 MW must be able to collect them for use in fertilization area 2500 ha. This raises the need for further processing.

The biogas, production of useful forms of energy, this is heat and electricity, environmental considerations are beyond the basic reason for their functioning. The above-mentioned forms of energy produced during combustion of biogas produced by anaerobic digestion in bioreactors, which in turn are a source of energy from agricultural products and various types of organic waste. The rate of methane fermentation process is conditioned by various factors, and one of them is the so-called temperature deposits. To ensure the optimum level the heating is required. Necessary to provide the heat comes from generators and is an alternative direction for its application in relation to sales to customers outside especially in the winter. Therefore it happens that the production of thermal energy in generator does not provide the necessary quantities.

This condition creates a need to propose solutions to post-fermentation processing waste in the process of ensuring the development of new product and the capacity to produce additional quantities of heat to supplement the balance.

Assuming that a large part of the biogas plants are located in areas where the predominant purchasers are farmers using an light soils with low organic carbon content and low acidic contents of available magnesium for plants. In the present invention proposes a technology of the mineral-organic fertilizer derived from waste dewatered digestate as possible as the source of easily available for plants of magnesium and carbon substrate which is easily integrated creative decay processes for use in the soil, and the aim of optimizing production costs proposed technology is also a donor of heat.

Known from prior art technologies do not meet the above requirements, this is, synergistic processing of digested matter into another form of fertilizer and the production of heat.

Familiar with the use of waste agricultural technologies, and agrotechnical processing into compost.

Disclosed below in the prior art methods for preparing mineral fertilizers and organic and mineral wastes do not use post-fermentation. These wastes are classified in the classification of waste under number 19 06 05 (liquor from anaerobic treatment of animal and vegetable), or number 19 06 06 (digestate from anaerobic treatment of animal and vegetable) are infinitely more valuable substrate for the production of these fertilizers and incomparably safer posed in terms of environmental hazards than the wastes used in the following technologies with code 19 06 04 (digestate from anaerobic treatment of municipal waste), commonly referred to as sludge.

It is known from patent specification FR 3648128 B1 (Application 1990) method and installation for the production of fertilizers with compost and waste products **characterized in that** the product is treated with sulfuric acid to dissolve organic substances obtained in this way the solution is filtered to remove unwanted materials are not soluble in sulfuric acid, then filtered the solution is mixed with calcium phosphate tri basic and / or dolomite to obtain a homogeneous mixture (SLIP), this is mixed in touch with your recycling and granules are formed, they are then dried by evaporation of water causing a acid concentration is achieved in the granules to a sufficient order to enable a quick response neutralization of phosphates and / or dolomite, and then drying the granules is continued until the indicated level of moisture is reached and the product market is separated from the product is too coarse (oversize) by known methods. The resulting product is a fertilizer - mineral.

It is known from patent specification PL 169484 a method for preparing organic-mineral fertilizer from sewage sludge by centrifuge **characterized in that** the sludge is added to the centrifuge fertilizers macronutrients and calcium carbonate and magnesium, and then lets the sludge worms breed Red Hybrid California.

It is known from patent specification PL 169896 as post-fermentation waste hygienization **characterized in that** the post-fermentation sludge is mixed with cement dust from electrostatic precipitators with cement and roasted dolomite and BASALT.

It is known from patent specification PL 178719 disposal of sewage sludge wherein the sludge is mixed with coal waste.

It is known from PL Patent 184149 B1 a method for producing fertilizer from organic waste **characterized in that** the organic waste shall be nitrogen dioxide or its precursor, and then added alkali.

It is known from patent specification PL 185159 as working fluids containing sludge **characterized in that** in a continuous process for the dehydration apply the acid and ammonia.

It is known from the description of the patent application PL 326127 method for producing solid fertilizer from organic sewage sludge wherein the sludge contained in the organic structures of biological origin partly mineralizes in the environment of a strong acid and the resulting mixture is neutralized and becomes a substance that binds water in the environment reaction.

It is known from patent specification PL 193582 a method for preparing granular organo-mineral fertilizers **characterized in that** for any mineral fertilizers added sludge, but in the case of ammonium or urea fertilizers, sewage sludge prior to mixing is treated with sulfuric acid or phosphoric acid to a pH aqueous extract in the range 6.5-8.0, and the resulting mixture is granulated and seasoning.

It is known from patent specification PL 194103 a method for producing granulated organic fertilizers **characterized in that** the dewatered sludge from the sewage is mixed with fly ash from coal-fired boilers, with binders and plasticizers and potassium fertilizer, after which the resulting mixture is granulated.

It is known from patent specification PL 202023 a method for preparing fertilizer from sewage sludge and a system for obtaining fertilizer from the sludge, **characterized in that** the sludge introduced into the reactor, acid-resistant encapsulated magnesium oxide is added, followed by addition of salts, trace elements and sulfate, urea leading the process to obtain an intermediate of the water content of crystallization is not more than 6.5 water molecules per molecule of produced magnesium sulfate, after which the intermediate is mixed with potassium and phosphorus fertilizer and then dry and dehydrated.

It is known from patent specification PL 206550 organic waste processing method and apparatus for processing organic waste wherein the organic waste is introduced in a continuous system into the heating chamber where it is subjected to heating at 105-300 °C, after which the solid fraction is poured into the discharge chamber.

It is known from patent specification PL 209857 a method for producing organic and mineral fertilizers on the basis of municipal sewage sludge wherein the sludge is mixed with the cereal straw, and the mixture is pumped through a die with calibration holes and cut into sections.

It is known from PL 210311 patent process for the preparation of fertilizer from the sludge produced in biological wastewater treatment plants **characterized in that** the encapsulated container technology introduced sludge, dry matter content maintained in the range from 40% to 15%, after the shine is amended as magnesium oxide in the form of roasted magnesite, then sulfuric acid is dosed while stirring the reaction mixture and discharging excess water, and the remaining not evaporated water associated the crystallization structure thus formed is magnesium sulfate.

Alternate direction of the use of waste associated with using them as fuel in the combustion process in order to obtain heat.

Commonly used for this purpose burning in the grate and fluidised bed boilers. More hazardous waste incineration takes place in the so-called waste incinerators. Solutions are used where an assembly of the evaporation of water from the bio-sludge, regardless of whether sludge is pre-dried, whether or not the team for the disinfection of water vapor gasification systems (low-temperature pyrolysis) of organic residues of bio-pellet catalytic reactor fully oxidizing organic compounds to H₂O and CO₂ efficiency of established systems, heat exchangers, in order to minimize the energy input to the process of recovery and final filters to capture part of the inorganic solids and metals and their compounds. Remains of an inorganic waste.

An attempt to synergistic production of heat and fertilizer application PL 385950 describes a method for producing electricity, heat, fertilizer and / or feed and ethanol from agricultural crops and waste products in the agro processing industry. It presents a method for producing electricity, heat, ethanol, fertilizer and / or feed from agricultural waste products and agro-processing, using waste, especially such as stillage, manure, straw, rape cakes, silage and other substrates , lies in the fact that integrated with each other: the distillery from biogas, heat collectors in the distillery and the conversion of alcohol-distilling slops for energy fertilizer and / or feed in order to achieve synergies, both economically and ecologically, in the processing of waste products. The method allows to obtain from agricultural waste products and useful products, such as ethanol, electricity and heat, and fertilizer, and fodder.

The above-mentioned technologies, which are image of the current state of the art in this field are dedicated towards the processing of sewage sludge, organic matter and so much more dangerous for environmental reasons. On the other hand, these technologies are possible to be used for processing waste in biogas digestate, can not, however, to obtain another desired product which is thermal energy.

Given the damage potential of microbial load contained in after fermentation wastes invention proposes a sufficiently effective technique hygienization consisting of subjecting the above-mentioned organisms acting extremely low pH-induced task of concentrated sulfuric acid at temperatures and pressures above the boiling point of water at normal pressure. Temperature and pressure generated during the neutralization of acid, magnesium carbonate, reaching the value of 150°C and 0.5 MPa. The conditions of low, and then changing pH and high temperature and pressure, combined with their duration, a complete waste hygienisation regardless of its origin and microbial load. Quantitative selection of afetr fermentation waste introduces sanitizers organic matter and decomposing it, and partly a mixture of sulfuric acid are added successively and magnesite allow the preservation of the product assumed amount of organic compounds composed mainly of chitin and cellulose, which compounds in the soil after application of a carbon skeleton in the resynthesis of organic compounds leading to the formation of humus connections.

Used to conduct the process of reactor pressure of 2.0 MPa strength allows you to secure the achievement of several atmospheres pressure and temperature of saturated steam in the range between 108 - 150 ° C. These conditions cause rapid hydrolysis, denaturation and coagulation enzymes and cellular structures. The resulting organic-mineral fertilizer is the dominant inorganic compound is magnesium sulfate. It is a form readily soluble in soil solution. Providing so this form of magnesium in the form of soil fertilization contributes to higher amounts of this element in the complex sorption, and consequently increases its availability to plants. It should be emphasized that in all the soils of the type of relationship rinsed air-water balance of magnesium is inherently vulnerable to permanent depletion due to its leaching into the soil profile beyond the reach of the root system of plants.

Technology according to the present invention also allows the recovery of large amounts of heat of reaction and use of this form of energy to the different needs associated with the functioning of the plant. In particular, this energy can supplement the heat generated in the generator powering the fermentation chamber, to be sold to external customers and serve as a source of heat for other uses of technology related to the operation of biogas plants, such as space heating or drying products The amount of heat accompanying hygienization 1 tonne of digested matter is about 1300 kW. So the main advantage is the possibility of alternative use of waste and post-fermentation processing of the organic-mineral fertilizer while the manufacture combined with the technical ability to use large amounts of heat.

Presented advantages of the existing solutions do not possess. Technology described in Patent FR 2648128 leads to complete decomposition of organic matter. Obtained after filtration and rejection of solid residues of excess sulfuric acid solution was neutralized after the reaction of synthesis of phosphates and / or dolomite forms a mineral fertilizer, artificial.

Technology described in patent PL 326127 is the obvious solution.

Technology described in patents PL 202023 and PL 210311 in the first stage assumes the addition of sewage sludge to a suspension of calcined magnesite. It contains magnesium oxide is a compound hygienic settlements, nor that causes a significant increase in temperature of the mixture. Second, in order to receive magnesium sulfate is added to sulfuric acid. The method according to these solutions involves the use of the resulting heat of reaction In the solution according to the invention, an installation for the production of fertilizer is connected by a water jacket cooling the reactor and installation of vapor condenser cooling water generator.

The addition of PL 210311 B1 by sulfuric acid after addition of sewage sludge calcined magnesite is to prevent excessive foaming, which is by the creators of technology is a phenomenon unfavorable for a task of organic acid. In the present embodiment according to the invention, these adverse event foaming is reduced by the use of a hermetic reactor where the resulting pressure foaming phenomenon is limited, and in addition it is installed on the surface of the substrate reacting suspension speed stirrer with the task of breaking foam. The addition of acid, as is also the first to set off a well-known exothermic reaction of mixing the acid with water, which in the proposed solution improves the energy balance of biogas plants.

The order of addition of calcined magnesite and sulfuric acid in the patent PL 210311 B1 is dictated by its creators do not need to call the formation to noxious fumes to the environment mainly selenium compounds. In the proposed solution, these compounds are formed in the reactor, but thanks to its airtight construction and installation of external odor neutralization by the process described in patent PL 210902 B1 in which the Fenton reaction, the phenomenon is not burdensome for the environment.

The technologies involve as key to the process of application of calcined magnesite, calcined rocks and thus being chemically with magnesium oxide. Need for environmental reasons would appear to be unjustified. The process of calcination of raw magnesites place under conditions of high temperature, so it is very energy intensive. In order to obtain a product of magnesium sulphate as fertilizer is sufficient to produce magnesium sulfate is the use of raw magnesite, not roasted. In the solution according to the invention alkalizing role of magnesium carbonate - a salt in the reaction with the acid which leaves the reaction of carbon dioxide, the gas whose vapor pressure is a major reason for the increase in pressure and temperature in the reactor than the size found in normal conditions.

Technologies presented in the two patents lead to the creation of fertilizer with the characteristics of mineral fertilizers. From the standpoint of fertilizer needs of soils, except soils with organic substances, as necessary as minerals are compounds of the appellants to the soil organic carbon. This objective, through the creation of organic-mineral fertilizer has been achieved in the proposed solution according to the invention.

The method according to the invention is presented below as an example

The fermentation waste is subjected to partial dehydration and as containing 42-50% s.m. in the amount of 1000 kg asks the reactor pressure. With the mixer gradually added 200 kg of concentrated sulfuric acid at such a rate to prevent too sudden temperature rise above 2 Celsius degrees/min and exceeded the value of 100°C. Then added in portions magnesite in an amount which is equivalent to about 180 kg of pure magnesium carbonate, at a rate of not allowing for very rapid increase in temperature above 2 Celsius degrees/min and exceeded the value of 150°C Releasing steam is discharged to the condenser which receives the heat. This heat, along with the warmth of a received through the water jacket of the reactor is the energy product of the process. Thickening slurry is pH control and adds the amount of magnesite, which is needed to bring the pH close to neutral suspension. The product contains magnesium sulfate hydrate with remnants of organic matter digested matter is then solidified or formed outside the reactor. Fertilizer according to the invention has been described in the embodiment

Mineral-organic fertilizer produced from waste sulfuric acid digestate higienizowanych and magnesium carbonate **characterized in that** it contains 4% Mg in the form of a hydrate of magnesium sulfate, and 15% organic carbon.

## Claims

1. The method of obtaining the mineral-organic fertilizer from waste digestate **characterized in that** the post-fermentation waste constitutes 20-70% of the charge content of 42-50% s.m. in which 35-60% is the organic carbon is treated with concentrated sulfuric acid in an amount of 10-30% by weight of the charge, and then neutralized with magnesium oxide in an amount of 10-35% by weight of the charge in terms of pure magnesium carbonate at the rate of sterilization of microbiological reference conditioning of waste post-fermentation in the temperature range 108-150°C for 30 minutes while maintaining the temperature of the mixture in the rate of ≤ 2°C / 1 min.

2. The method according to claim 1, **characterized in that** the reaction proceeds in acid-proof hermetic reactor with water jacket, a stirrer with speeds from 10 to 50/1 min, mechanical foam breaking system, feeding system and the pressure of solids and liquids.

3. The method according to claim 1, **characterized in that** the sulfuric acid is added to the speed reference to the temperature gradient did not exceed 2°C / 1 min. and exceeded the value of 100°C.

4. The method according to claim 1, **characterized in that** the heat of the two reactions received by the reactor cooling system and air-tight vapor condenser is transferred to block the energy and heat for further transport to the biogas methane fermentation chamber or external customers of heat.

5. Mineral-organic fertilizer produced from the fermentation of waste sulfuric acid hygienic and magnesium carbonate, **characterized in that** it contains 4-12% Mg and 5-25% organic carbon, contain magnesium sulfate hydrate hydration status not to exceed amount of seven water molecules per one sulfate molecule.
